# EUROPEAN PATENT SPECIFICATION

(11) **EP 0 950 549 B1**
(45) Date of publication and mention of the grant of the patent: **07.11.2001**
(21) Application number: 98107007.1
(22) Date of filing: 17.04.1998
(51) Int. Cl.: B60D 1/00, B60D 1/52, B60D 1/64, F16B 21/12

(54) **Vehicle towing member with a removable but automatically lockable ball hook, provided with a current socket**
Fahrzeugabschleppvorrichtung mit abnehmbarer Kugelkopfkupplung, selbsttätiger Vorrichtung und Stromsteckdose
Dispositif de remorquage d'un véhicule avec un accouplement à rotule amovible et verrouillage automatique, comportant une prise de courant

(43) Date of publication of application: 20.10.1999
(73) Proprietor: Ellebi S.r.l., 42040 Santa Vittoria di Gualtieri (Emilia) (IT)
(72) Inventor: Pavesi, Pasquale, 42016 Guastalla, (Reggio Emilia) (IT)
(74) Representative: Ripamonti, Enrico, Dr. Ing.

(56) References cited:
- DE-A- 3 327 834
- DE-A- 3 718 552
- DE-U- 9 006 077
- FR-A- 2 702 421
- US-A- 4 348 035
- US-A- 5 607 315

## Description

This invention relates to those towing members which enable a vehicle (such as an automobile) to tow a trailer (for example a caravan or truck). More particularly, the invention relates to those towing members in which a part of the towing member (the so-called ball hook, ie the projecting element which enables the mechanical connection to be made to the trailer) can be removed from the vehicle when not required, but can be reapplied when required.

More specifically, this type of towing member comprises a first part which is fixed permanently to the towing, and a second part (the said ball hook) which can be locked automatically to the first in a removable manner.

DE-C-3718552 describes a towing member of the aforesaid type, in which the so-called engagement end of the ball hook (the removable part), ie the end distant from the ball-shaped end, is shaped as a hemispherical cap and can be inserted (when mounting the removable part) into a cylindrical cavity provided in the fixed part of the towing member. The removable part is also provided with two pins which are coaxial and project in opposite directions each from one side of the removable part. A semi-cylindrical region of the lateral surface of each of said pins makes contact (when the removable part is mounted) with a corresponding semi-cylindrical seat provided in the fixed part. The removable part also comprises a locking pin contained in a relative outwardly open cavity provided in the removable part. The locking pin can move in the two longitudinal directions within this cavity, such that one end of the locking pin can be made to project from this seat or to retract completely into it. When the removable part has been mounted, the end of the locking pin is maintained in its projecting position by the action of springs in such a manner as to engage a corresponding stop provided in the fixed part, so as to maintain the removable part locked to the fixed part. In the removable part there are also provided a release handle which by means of a rack and pinion mechanism enables the locking pin to be reetracted to release the removable part from the fixed part, and a feeler means which enables the locking pin to be released from its retracted position (so that it snaps into its projecting position) when the hemispherical engagement end and the opposing pins of the removable part are inserted into the relative seats provided in the fixed part.

The aforedescribed towing member has various drawbacks. In particular its fixed part is rather bulky and is not suitable if the space available for its application to the vehicle is small. Moreover, once applied to the vehicle this fixed part can project from below the vehicle bumper, causing resultant problems. Finally, this towing member is rather complicated and costly to construct.

Attention is also drawn to US-A-4 348 035. A towing member according to the preamble of claim 1 is known from DE-U-90 06 077.

An object of the present invention is to provide a towing hook in which the fixed part is of minimum bulk, so as to be able to be applied to any motor vehicle.

A further object is to provide a towing hook which is of simple and low-cost construction.

As is well known to all who use the aforedescribed towing member, once the removable part of the towing member has been mounted on the fixed part, the electrical connection between the trailer electrical system and the current socket provided on the vehicle has to be made manually. To satisfy both aesthetic considerations and legal regulations, this current socket is often located in a position which is not easily accessible, and in particular a position partly hidden from view, obliging the user to kneel down in order to be able to insert the plug of the trailer electrical system into said socket. In other cases this socket is located in a position corresponding to the lowest point of the fixed part of the towing member, with the danger of possible impact against the ground under particular conditions of use (when rising on steep access ramps or boarding a ferry). Sometimes the position chosen for this socket requires the removal of parts of the rear bumper of the towing vehicle, with consequent poor appearance and a loss of strength of the bumper and/or a limitation on its protection against collisions.

Consequently a further object of the invention is to obviate the aforesaid drawbacks relative to the electrical connection.

The inventor of this invention is conscious of the fact that it would be very comfortable for the user to have available a socket provided directly on the removable part of the towing member, and to automatically make the electrical connection between this socket and the vehicle electrical system simultaneously with the mounting of the removable part onto the fixed part of the towing member. This consequently represents a further object of the invention.

The first three aforesaid objects are attained by the towing member according tq the present invention, of the type comprising a fixed part to be applied to the towing vehicle, and a removable part comprising the hooking ball, mountable on the fixed part and automatically lockable to this latter, the fixed part comprising an open cavity into which an engagement end of the removable part is insertable, characterised in that the inner surface of the cavity comprises two specular grooves which open outwards at one of their ends, and into which corresponding ribs provided on the engagement end of the removable part can be inserted as a matching fit.

According to one embodiment of the invention, on the fixed part of the towing member there is provided a contact unit electrically connected to the vehicle electrical system, on the removable part of the towing member there also being provided a contact unit electrically connected to a current socket carried by the removable part of the towing member, the two contact units being arranged in a position such as to automatically establish electrical connection between them on mounting the removable part onto the fixed part.

The contact unit provided on the fixed part is conveniently positioned within said cavity present in the fixed part.

The invention will be more apparent from the following description of one embodiment thereof. In this description reference is made to the accompanying drawings, on which:
Figure 1 is a perspective view of the towing member of the invention, the fixed part being separated from the removable part;
Figure 2 is a perspective view of the removable part alone, seen from a different viewpoint then Figure 1;
Figure 3 is a longitudinal section through the towing member in the condition shown in Figure 1, the section being taken on a middle vertical plane;
Figure 4 is similar to Figure 2, but shows the condition in which the removable part of the towing member is locked to the fixed part thereof;
Figure 5 is a cross-section on the line 5-5 of Figure 3;
Figure 6 is a cross-section similar to the preceding, but taken on the line 6-6 of Figure 4 to show the condition in which the locking pin can be reset.

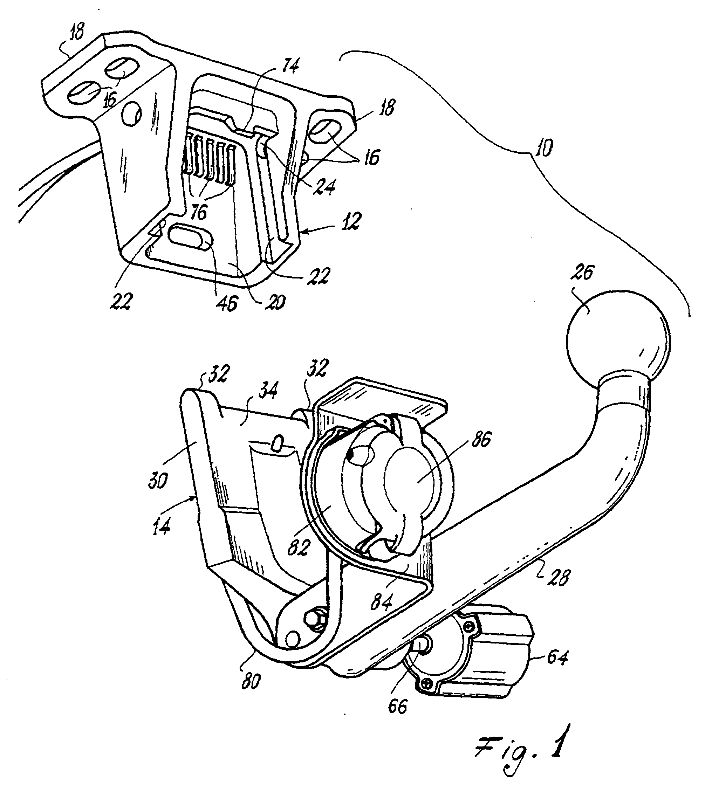

From Figure 1 it can be seen that the towing member 10 comprises a part 12 to be fixed to the towing vehicle (not shown) and known hereinafter as the fixed part, and a part 14 (commonly known as the ball hook), known hereinafter as the removable part, comprising the hooking ball 26 and removably lockable to the fixed part 12. The fixed part 12 is fixed to the vehicle by usual bolts (not shown) insertable thorugh relative slotted holes 16 provided in two flanges 18 on the fixed part 12. This latter (shown in Figure 1 in the position in which it is fixed to the vehicle) comprises a cavity 20 open downwards and rearwards (with reference to the vehicle). In each of the two lateral faces of the cavity 20 there is provided a groove 22 which opens outwards at its lower end and terminates at its other end with a semi-cylindrical surface (in Figure 1 only one is visible, indicated by 24). The two grooves 22 are arranged specularly.

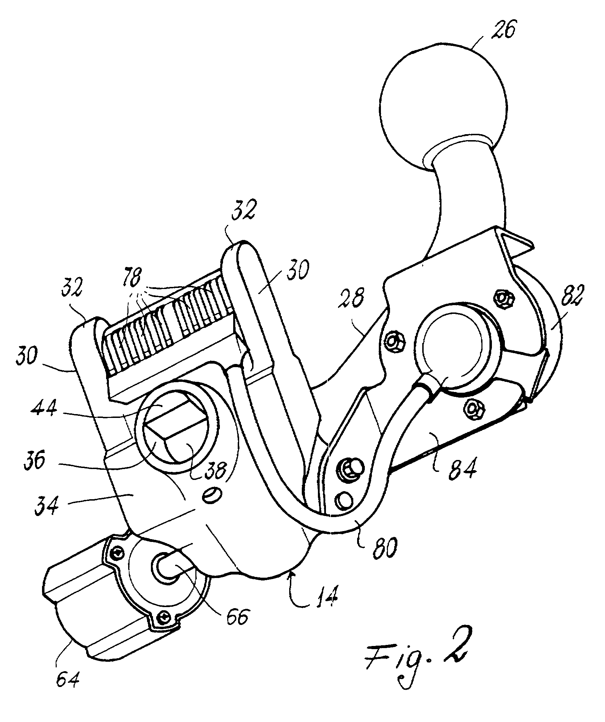

The removable part 14 comprises an arm 28, to one end of which the ball 26 is fixed, the other end widening to form an insertion portion 34 comprising two symmetrical lateral ribs 30 the upper ends of which terminate with a semi-cylindrical surface 32. The ribs 30 are shaped to mate with a respective groove 22 of the fixed part 12 when the engagement end 34 of the removable part 14 is inserted (as is apparent from Figures 3 and 4) into the cavity 20 of the fixed part 12.

A dead hole 36 is provided in the arm 28 of the removable part 14, and opens into the end face of the insertion portion 34. Into the dead hole 36 there is inserted cylindrical locking pin 38 which, when free, is urged outwards by the action of a spring 40 inserted into a coaxial cavity 42 provided in the pin 38, such that its relative end 44 projects from the dead hole 36 so as to be able to engage in a through hole 46 provided in the fixed part 12 such as to lock the removable part 14 in position within the fixed part 12, as shown in Figure 4.

On the lateral surface of the locking pin 38 there is provided perpendicular to the axis of this latter a dead hole 48 which houses a ball 50 and a more inner spring 52 which urges the ball 50 outwards.

When in the locked state shown in Figure 4 the ball 50 is completely inserted in the relative hole 48, whereas the end 44 of the locking pin 38, under the action of the spring 40, projects from the relative hole 36 such that the inclined surface provided at the end 44 engages the lower edge of the hole 46 in the fixed part 12.

In the released state shown in Figure 3 the ball 50 enables the locking pin 38 to be retained in its retracted or set position, the ball 50 being located in correspondence with a hole 54 provided in the engagement end 34 and which connects the dead hole 36 to the outside. Within the hole 54 there is movable in both directions a feeler pin 56, one end of which can project outwards to a predetermined maximum extent (shown in Figure 3). In this situation, if the projecting end of the feeler pin 56 is urged outwards, the ball 50 is urged inwards to consequently release the locking pin 38 which, under the action of the relative spring 40, passes from the position visible in Figure 3 to the position shown in Figure 4.

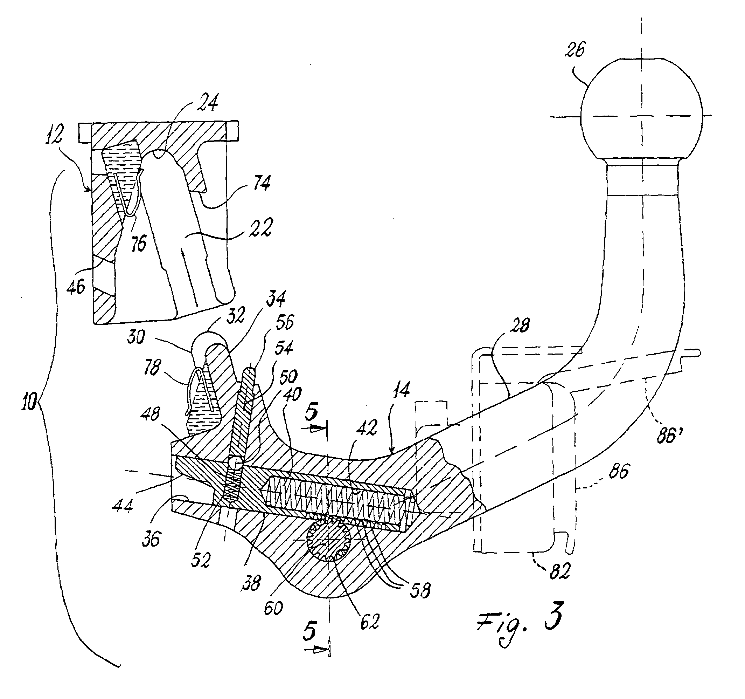

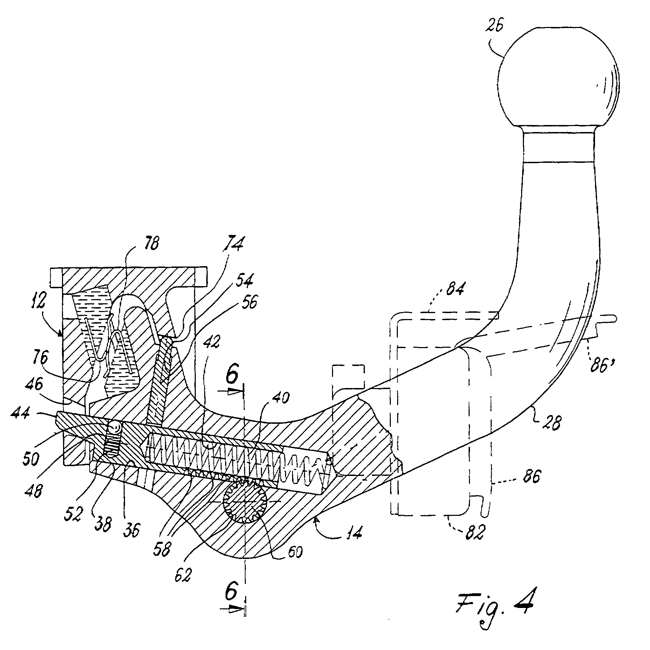

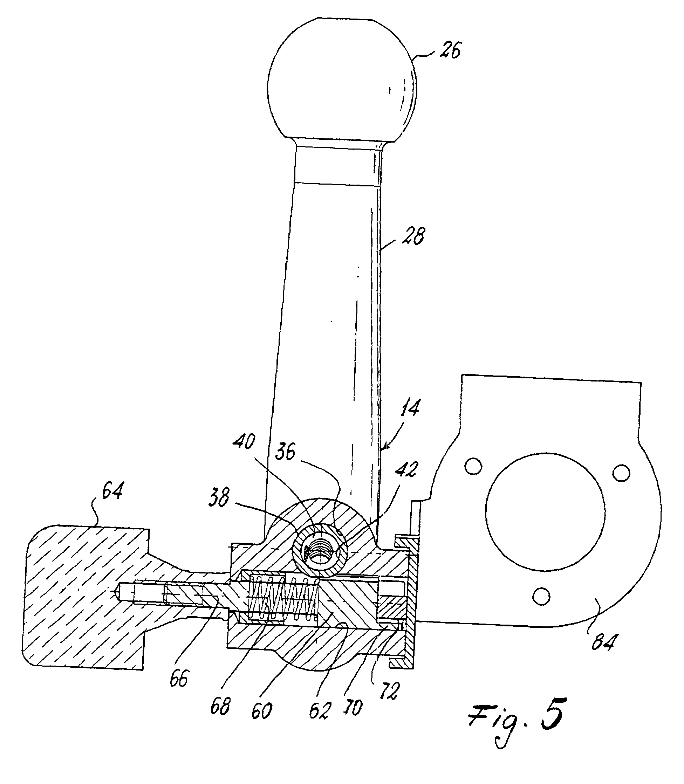

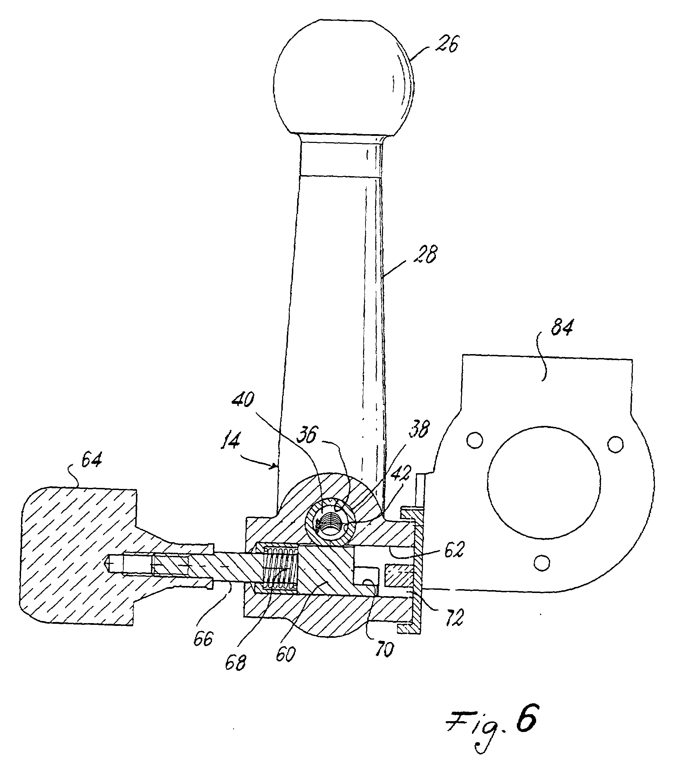

In the outer lateral surface of the locking pin 38 there is provided a toothing forming a rack 58 in which there can engage a pinion 60 positioned transverse to the locking pin 38 and contained in a suitable cylindrical seat 62 provided in the arm 28. The pinion 60 forms a single piece with a coaxial shaft 66, one end of which projects outwards from the arm 28. The pinion 60 can be rotated by a manual gripping element, in this specific case a coaxial knob 64 fixed to the outer end of the shaft 66. The locking pin 38 can,be made to retract by rotating the knob 64. As can be seen from Figures 5 and 6, the pinion 60 can also be moved axially in the two directions within its seat 62, and. is maintained urged into the position shown in Figure 5, namely its fixed position, by a coaxial helical spring 68 so as to force its suitably shaped free end 70 into a relative seat 72 to prevent rotation of the pinion 60. To enable the pinion 60 to rotate, so that it can retract the locking pin 38 by rotation of the knob 64, the knob 64 must be pulled outwards so that the end 70 of the pinion 60 leaves its seat 72. The retraction of the locking pin 38 means that at a certain point the ball 50 becomes positioned at the feeler pin 56, to force it outwards into its position of maximum projection by virtue of the action of the relative spring 48. This enables the ball 50 to partially enter the seat 54 of the pin 56, so locking the locking pin 38 in the retracted position of Figure 3. In this situation the shaped end 70 of the pinion 60 cannot re-enter the relative seat 72, so that a part of the shaft 66 remains exposed (see Figure 6), and can be suitably coloured to make it more visible in order to indicate that the locking pin 38 is set in its retracted position.

As is best seen in Figure 1, within the cavity 20 the fixed part 12 comprises electrical contacts 76 electrically connected to the vehicle electrical system. When the removable part 14 is locked to the fixed part 12 (Figure 4), said contacts 76 are pressed against corresponding electrical contacts 78 provided on the removable part 14 (see Figure 2) and electrically connected by the electric cable 80 to a current socket 82 (of conventional type for such use) fixed to the arm 28 by a bracket 84.

To mount the removable part 14 onto the fixed part 12, it is sufficient to insert the engagement end 34 of the removable part 14 into the cavity 20 in the fixed part 12 (already fixed to the vehicle) such that the ribs 30 of the engagement end 34 slide as far as possible into the relative grooves 22 in the cavity 20 of the fixed part 12. In achieving this, that end of the feeler pin 56 projecting from the removable part 14 is pressed inwards by the projection 74 provided on the fixed part 12. Consequently the feeler pin 56 urges the ball 50 inwards overcoming the reaction force of the relative spring 52, so releasing the locking pin 38 which under the action of the relative spring 40 is urged outwards so that its end 44 becomes inserted into the hole 46 in the fixed part 12, so automatically locking the removable part 14 to the fixed part 12. This operation also causes the electrical contacts 76 and 78 to press against each other, so making the electrical connection between the electrical system of the towing vehicle and the current socket 82. In the usual manner the socket 82 is provided with a relative protection cover 86 (shown dashed, including in its open position 86', in Figures 3 and 4).

As can be seen from the figures, by virtue of the towing member 10 of the invention, the current socket 82 can be arranged in the position of maximum accessibility and comfort for the user. It is also protected against impact when the towing member is being used, and also when not in use as the socket has already been removed together with the removable part, with the further advantage in this latter case of not creating aesthetic problems as it is not present on the vehicle.

A considerable advantage of the towing member of the invention is that it can be made of particularly small overall size, enabling it to be applied in practice to all automobiles. Moreover as the operations involved in coupling the removable part 14 to the fixed part involve inserting the engagement end 34 of the removable part 14 from the bottom upwards into the cavity 20 of the fixed part 12, the towing member 10 is particularly suitable for use on vehicles having only a small space between the vehicle body and the rear bumper, with a further aesthetic advantage due to the fact that once locked to the fixed part 12, the removable part 14 is invisible in practice.

It should also be noted that the towing member 10 is composed of only a very few pieces of simple construction. Again, the fixed part 12, which can be fixed to the vehicle by bolts, is easily applied to the different types of towing structure with which vehicles are provided, and can be easily replaced when required.

The release knob 64 can be conveniently provided with a usual antitheft device of key type (not shown in the figures for simplicity), so that when the antitheft device is connected the knob 64 rotates idly about its pin 66, making not only accidental or intentional damage to the pinion 60 impossible, but also damage as a result of possible attempts at forcing.

Finally the towing member of the invention provides reliable coupling. In this respect the release knob 64 remains in the released position of Figures 3 and 6 (knob more greatly projecting, making the red-coloured shaft 66 visible) until locking is achieved between the removable part 14 and the fixed part 12, and moving into the position shown in Figures 4 and 5 (knob 64 less projecting, so that the red portion of the shaft 66 is not visible) only at the moment of locking.

## Claims

1. A vehicle towing member (10) of the type comprising:
a fixed part (12) to be applied to the towing vehicle, and a removable part (14) comprising a hooking ball (26), the removable part (14) being mountable on the fixed part (12) and automatically lockable to this laffer, the fixed part (12) comprising an open cavity (20) into which an engagement end (34) of the removable part (14) is insertable, the inner surface of the cavity (20) comprising two specular grooves (22) which open outwards at one of their ends, and into which corresponding ribs (30) provided on the engagement end (34) of the removable part (14) can be iserte as a matching fit, **characterized in that** a dead hole (36) being provided in the removable part (14), the dead hole (36) opening to the outside at the engagemet end (34) of the latter (14), a locking pin (38) movable longitudinally in the two directions being inserted in the dead hole (36), the locking pin (38) being maintained urged into a position in which one of its end (44) laterally projects to the outside by elastic means (40), means (50, 48) for retaining the locking pin (38) in its retracted position until a feeler means (56) senses that the engagement end (34) of the removable part (14) has been inserted into the cavity (20) of the fixed part (12), said end (44) of the locking pin (38) being engaged in a corresponding seat (46) provided in the fixed part (12) when the engagement end (34) of the removable part (14) is completely inserted into the cavity (20) of the fixed part (12);
a first contact unit (76) electrically connected to the vehicle electrical system being provided inside the cavity (20) of the fixed part (12), a second contact unit (78) on the removable part (14) and electrically connected to a current socket (82) carried by the latter (14), the first (76) and second (78) contact units being arranged in a position such as to automatically establish electrical connection between them on mounting the removable part (14) onto the fixed part (12).

2. A towing member (10) as claimed in claim 1, wherein on the lateral surface of the locking pin (38) there is provided a toothing forming a rack (58) in which there engages a pinion (60) positioned trasversely to the locking pin (38) and contained in a seat provide in the removable part (14), the pinion (60) being coaxially fixed to one end of a shaft (66), the other end of which projecting to the outside and carrying fixed thereto a manual gripping element (64) which enables the pinion (60) to be rotated, this latter (60) being movable axially in the two directionsby acting on the gripping element (64).

3. A towing member (10) as claimed in claim 1, wherein that face of the pinion (60) distant from the shaft (66) is shaped (70) to mate with a corresponding shaping (72) provided in the body of the removable part (14) in order to prevent rotation of the pinion (60), this latter being movable in the two direction within the relative cavity (62), elastic means (68) urging the pinion (60) towards its locked position.

4. A towing member (10) as claimed in claim 1, wherein the manual gripping element (64) is provided with an antitheft device which renders it idle.

5. A towing member (10) as claimed in claim 1, wherein the first (76) and the second (78) contact units are of the sliding type.

## Patentansprüche

1. Fahrzeuganhängerkupplung (10) der Bauart, die aufweist:
ein feststehendes Teil (12), das an dem Zugfahrzeug anzubringen ist, und ein abnehmbares Teil (14) mit einer Kupplungskugel (26), wobei das abnehmbare Teil (14) mit dem befestigten Teil (12) verbindbar und selbsttätig mit dem letzteren verriegelbar ist, wobei das feststehende Teil einen offenen Hohlraum (20) aufweist, in den ein Eingriffsende (34) des abnehmbaren Teils (14) einführbar ist, wobei die Innenfläche des Hohlraums (20) zwei spiegelbildliche Nuten (22) aufweist, die sich an einem ihrer Enden nach außen öffnen und in die entsprechende Rippen (30), die auf dem Eingriffsende (34) des abnehmbaren Teils (14) vorgesehen sind, im passenden Sitz eingeführt werden können, **dadurch gekennzeichnet, daß** ein Sackloch (36) in dem abnehmbaren Teil (14) vorgesehen ist, wobei das Sackloch (36) sich an dem Eingriffsende (34) von dem letzteren (14) zur Außenseite hin öffnet, wobei ein Verriegelungsbolzen (38), der in Längsrichtung in beiden Richtungen beweglich ist, in das Sackloch (36) eingesetzt ist, wobei der Verriegelungsbolzen (38) durch elastische Mittel (40) in eine Position, in der eines seiner Enden (44) seitlich nach außen vorsteht, gedrückt gehalten wird, wobei Mittel (50, 48) zum Festhalten des Verriegelungsbolzens (38) in seiner zurückgezogenen Position bis ein Tastmittel (56) erkennt, daß das Eingriffsende (34) des abnehmbaren Teils (14) in den Hohlraum (20) des feststehenden Teils (12) eingeführt worden ist, vorhanden sind, wobei das Ende (44) des Verriegelungsbolzens (38) mit einer entsprechenden Aufnahme (46), die in dem feststehenden Teil (12) vorgesehen ist, in Eingriff steht, wenn das Eingriffsende (34) des abnehmbaren Teils (14) vollständig in den Hohlraum (20) des feststehenden Teils (12) eingeführt ist;
wobei eine erste Kontakteinheit (76), die elektrisch mit dem elektrischen System des verbunden ist, im Inneren des Hohlraums (20) des feststehenden Teils (12) vorgesehen ist, und eine zweite Kontakteinheit (78) an dem abnehmbaren Teil (14) vorgesehen ist, die elektrisch mit einer Stromsteckdose (82) verbunden ist, die von dem letzteren (14) getragen wird, wobei die erste (76) und zweite (78) Kontakteinheit in einer Position angeordnet sind, so daß beim Befestigen des abnehmbaren Teils (14) an dem feststehenden Teil (12) automatisch elektrische Verbindung zwischen ihnen hergestellt wird.

2. Anhängerkupplung (10) nach Anspruch 1, wobei auf der Seitenfläche des Verriegelungsbolzen (38) eine Zahnung vorgesehen ist, die eine Zahnstange (58) bildet, in die ein Ritzel (60) eingreift, das quer zu dem Verriegelungsbolzen (38) angeordnet ist und in einer Aufnahme enthalten ist, die in dem abnehmbaren Teil (14) vorgesehen ist, wobei das Ritzel (60) koaxial an einem Ende einer Welle (66) befestigt ist, deren anderes Ende nach außen vorsteht und ein daran befestigtes Handgreifelement (64) trägt, das es dem Ritzel (60) ermöglicht, gedreht zu werden, wobei dieses letztere (60) durch Einwirken auf das Handgreifelement (64) axial in die zwei Richtungen beweglich ist.

3. Anhängerkupplung (10) nach Anspruch 1, wobei die von der Welle (66) entfernte Seite des Ritzels (60) so geformt ist, um mit einer entsprechenden Formgestaltung (72), die in dem Körper des abnehmbaren Teils (14) vorgesehen ist, in Eingriff zu treten, um die Drehung des Ritzels (60) zu verhindern, wobei das letztere innerhalb des zughörigen Hohlraums (62) in die beiden Richtungen bewegbar ist, wobei elastische Mittel (68) das Ritzel (60) in seine verriegelte Position drücken.

4. Anhängerkupplung (10) nach Anspruch 1, wobei das Handgreifelement (64) mit einer Antidiebstahlsvorrichtung versehen ist, die es nutzlos macht.

5. Anhängerkupplung (10) nach Anspruch 1, wobei die erste (76) und die zweite (78) Kontakteinheit vom Schleifkontakttyp sind.

## Revendications

1. Dispositif de remorquage d'un véhicule (10) du type comprenant :
une partie fixe (12) destinée à être fixée au véhicule tracteur et une partie amovible (14) comprenant une boule d'attelage (26), la partie amovible (14) pouvant être montée et verrouillée automatiquement sur la partie fixe (12), la partie fixe (12) comprenant une cavité ouverte (20) apte à recevoir une extrémité d'engagement (34) de la partie amovible 14, la surface interne de la cavité (20) comportant deux rainures symétriques (22) ouvertes vers l'extérieur à l'une de leurs extrémités et dans lesquelles peuvent s'engager en ajustement serré des nervures correspondantes (30) prévues sur l'extrémité d'engagement (34) de la partie amovible (14), **caractérisé en ce qu'**un logement à fond plein (36) est ménagé dans la partie amovible (14), lequel logement à fond plein (36) débouche sur l'extérieur au niveau de l'extrémité d'engagement (34) de ladite partie amovible (14), une goupille d'arrêt (38) mobile longitudinalement dans les deux sens étant insérée dans le logement à fond plein (36), la goupille d'arrêt (38) étant rappelée par. un moyen élastique (40) dans une position dans laquelle une de ses extrémités (44) dépasse latéralement vers l'extérieur, des moyens (50, 48) étant prévus pour retenir la goupille d'arrêt (38) dans sa position rétractée jusqu'à ce qu'un doigt de détection (56) détecte que l'extrémité d'engagement (34) de la partie amovible (14) a été insérée dans la cavité (20) de la partie fixe (12), ladite extrémité (44) de la goupille d'arrêt (38) venant s'engager dans un siège correspondant (46) prévu dans la partie fixe (12) lorsque l'extrémité d'engagement (34) de la partie amovible (14) est complètement insérée dans la cavité (20) de la partie fixe (12) ;
une première unité de contact (76) raccordée électriquement au système électrique du véhicule étant prévue à l'intérieur de la cavité (20) de la partie fixe (12), une seconde unité de contact (78) prévue sur la partie amovible (14) étant raccordée électriquement à une prise de courant (82) supportée par cette dernière (14), les première (76) et seconde (78) unités de contact étant positionnées de manière à assurer automatiquement entre elles le raccordement électrique lors du montage de la partie amovible (14) sur la partie fixe (12).

2. Dispositif de remorquage (10) selon la revendication 1, **caractérisé en ce que** sur la surface latérale de la goupille d'arrêt (38) est prévue une denture formant crémaillère (58) dans laquelle s'engrène un pignon (60) positionné transversalement par rapport à ladite goupille d'arrêt (38) et logé dans un siège prévu sur la partie amovible (14), le pignon (60) étant fixé coaxialement à une extrémité d'un axe (66), dont l'autre extrémité dépasse vers l'extérieur et supporte un élément de commande manuelle (64) fixé dessus, qui permet de faire tourner le pignon (60), ce dernier (60) pouvant être déplacé axialement dans les deux sens par actionnement de l'élément de commande (64).

3. Dispositif de remorquage (10) selon la revendication 1, **caractérisé en ce que** la face du pignon (60) située à l'opposé de l'axe (66) est formée (70) de manière à engager un profil correspondant (72) prévu dans le corps de la partie amovible (14), afin d'empêcher la rotation du pignon (60), ce dernier étant mobile dans les deux sens, à l'intérieur de la cavité associée (62), des moyens élastiques (68) rappelant le pignon (60) vers sa position verrouillée.

4. Dispositif de remorquage (10) selon la revendication 1, **caractérisé en ce que** l'élément de commande manuel (64) est doté d'un dispositif antivol qui assure son débrayage.

5. Dispositif de remorquage (10) selon la revendication (1), dans lequel les première (76) et seconde (78) unités de contact sont de type à glissement.
